# EUROPÄISCHE PATENTSCHRIFT

(11) **EP 2 671 038 B1**
(45) Veröffentlichungstag und Bekanntmachung des Hinweises auf die Patenterteilung: **04.05.2016**
(21) Anmeldenummer: 12703962.6
(22) Anmeldetag: 31.01.2012
(51) Int. Cl.: F28D 20/02

(54) **LATENTWÄRMESPEICHER**
LATENT HEAT STORAGE DEVICE
ACCUMULATEUR DE CHALEUR LATENTE

(30) Priorität: 31.01.2011 DE 202011002156 U
(43) Veröffentlichungstag der Anmeldung: 11.12.2013
(73) Patentinhaber: PROMAT GmbH, 40878 Ratingen (DE)
(72) Erfinder: KRASSELT, Volker, 40882 Ratingen (DE)
(74) Vertreter: Ring & Weisbrodt
(86) Internationale Anmeldenummer: PCT/EP2012/000412
(87) Internationale Veröffentlichungsnummer: WO 2012/104060

(56) Entgegenhaltungen:
- EP-A1- 2 308 813
- DE-A1- 19 929 861
- DE-A1-102004 005 912
- JP-A- 58 219 399
- JP-A- 2004 269 560
- US-A- 4 259 401
- HAWES D W ET AL: "Latent heat storage in building materials", ENERGY AND BUILDINGS, LAUSANNE, CH, Bd. 20, Nr. 1, 1. Januar 1993 (1993-01-01) , Seiten 77-86, XP002605677, ISSN: 0378-7788, DOI: 10.1016/0378-7788(93)90040-2 [gefunden am 2003-02-11]

## Beschreibung

Die vorliegende Erfindung betrifft einen Latentwärmespeicher-Körper umfassend einen zumindest teilweise offenporigen porösen Träger aus einem silikatischen Material, das ein Calciumsilikathydrat enthält oder hieraus besteht, und ein hieran gebundenes Latentwärmespeicher-Material, insbesondere ein Phasenumwandlungs-Material. Die Erfindung ist zudem auf einen Latentwärmespeicher gerichtet, welcher wenigstens einen vorgenannten Latentwärmespeicher-Körper umfasst.

Bei der Latentwärmespeicherung macht man sich den Effekt zunutze, dass die bei einer Zustandsänderung eines Stoffs aufgenommene beziehungsweise abgegebene thermische Energie wesentlich größer ist als die Wärme, die er aufgrund seiner normalen spezifischen Wärmekapazität, also ohne die Zustandsänderung, speichern kann. Zu diesem Zweck werden Latentwärmespeicher-Materialien verwendet, deren latente Reaktionswärme, Schmelzwärme, Lösungswärme oder auch Adsorptionswärme in oben genannter Weise genutzt wird, um thermische Energie zu speichern. Weitere wichtige Voraussetzungen für die technische Verwertbarkeit solcher Latentwärmespeicher-Materialien bestehen darin, dass die entsprechende Reaktion vollkommen reversibel sein muss und die Materialien zudem ihre Funktionalität auch über viele Wiederholungszyklen aufrecht erhalten müssen.

Bislang werden solche Phasenumwandlungs-Materialien oder auch Latentwärmespeicher-Materialien, bei denen reversible chemische Prozessen zum Einsatz kommen, in Latentwärmespeichern als Speichermedium eingesetzt. Derartige Latentwärmespeicher sind beispielsweise aus der DE 43 33 829 bekannt, bei der Wärmeenergie über einen Solarkollektor gewonnen und über einen Wärmeträger zu einem Speichermedium transportiert wird. Dort wird die eingebrachte Wärmeenergie in Form von Adsorptions- und Desorptionsenergie auf das Speichermedium übertragen bzw. aus diesem rückgewonnen. Als Speichermaterialien werden Molekularsiebe vorgeschlagen, an denen Wasserdampf ad- bzw. desorbiert wird.

Aus der DE 35 32 093 ist weiterhin ein thermochemischer Wärmespeicher bekannt, bei dem mittels Adsorptions- und Desorptionsprozessen von Wasser oder Ammoniak an Zeolith oder Silicagel Wärmeenergie gespeichert bzw. abgerufen werden kann. Bei beiden zuvor genannten Vorrichtungen befinden sich die Adsorptions- bzw. Desorptionsmedien in einem Reaktionsbehälter, in dem sie mittels eines Wärmetauschers erhitzt werden können, um den adsorbierten Stoff, d. h. Wasser oder Ammoniak abzuspalten, wodurch der thermochemische Wärmespeicher geladen wird. Die desorbierte Substanz wird anschließend aus dem Reaktionsbehälter entfernt. Um die gespeicherte Wärmeenergie zurück zu gewinnen, wird der desorbierte Stoff, also das Wasser bzw. der Ammoniak wieder mit dem im Reaktionsbehälter befindlichen Feststoff in Kontakt gebracht, wodurch Adsorptionswärme frei wird, die dann über den Wärmetauscher an einen Verbraucher, beispielsweise eine Heizung oder einen Warmwasseraufbereiter, abgegeben wird.

Schließlich ist in der EP 1 975 219 ein thermochemischer Wärmetauscher sowie ein Heizsystem mit einem solchen Wärmespeicher beschrieben, bei dem in einem Reaktionsraum Magnesiumamid bereitgestellt wird, das durch Eintrag von Wärmeenergie über einen Wärmetauscher in einer chemischen Reaktion Ammoniakgas unter Bildung von Magnesiumnitrid freisetzt, wobei der Wärmespeicher geladen wird. Das gebildete Ammoniakgas wird mittels einer Pumpe bzw. eines Verdichters in einen Fluidspeicher überführt, wo es unter Druck verflüssigt werden kann. Zum Entladen des Wärmespeichers wird das Ammoniakgas wieder in den Reaktionsraum überführt, wo es mit dem Magnesiumnitrid in einer exothermen Reaktion zu Magnesiumamid reagiert, wobei die Reaktionswärme über den Wärmetauscher an einen Verbraucher abgegeben werden kann. Als Energiequelle zum Laden des Wärmespeichers dient beispielsweise ein Solarkollektor oder die Wärme eines Abgasstroms in einem Kraftfahrzeug.

Problematisch bei den zuvor genannten Methoden zur Latentwärmespeicherung ist es, dass hierbei in der Regel ein Wärmetauscherfluid zwingend erforderlich ist, mit welchem die Wärme zum Speichermedium hin- und wieder weggeführt werden kann. Dies hat nicht nur Wärmeverluste durch die Übertragung zur Folge, sondern verkompliziert den Aufbau erheblich. Gerade in der ökologischen Energierückgewinnung im Gebäudebereich ist eine dezentrale und weniger komplexe Möglichkeit zur Wärmespeicherung wünschenswert.

Zu diesem Zweck sind beispielsweise Baustoffplatten im Handel erhältlich, die mit einem Phasenumwandlungs-Material ausgerüstet sind. So ist es beispielsweise bekannt, ein von der BASF unter der Bezeichnung Micronal^{®} PCM angebotenes Latentwärmespeichermaterial in Gipsbauplatten zu verwenden. Bei Micronal^{®} PCM handelt es sich um kunststoffummantelte Wachs-Partikel, die zur Rohstoffmischung der Gipsbauplatten hinzuformuliert werden können. Zwar erhält man auf diese Weise eine Baustoffplatte mit Latentwärme-speichernden Eigenschaften, jedoch besteht ein Problem darin, dass die Menge an PCM-Material in der Gipsplatte stark limitiert ist. Die Micronal^{®} PCM Kunststoffkapseln wirken wie ein Füllstoff, wodurch wie bei jedem anderen Füllstoff auch die Platte brüchig wird, wenn der Füllstoffanteil gegenüber dem Bindemittel, also Gips, einen bestimmten Wert übersteigt. Daher ist letztlich die spezifische Wärmespeicherkapazität in J/kg solcher Gipsbauplatten nicht für alle Anwendungen auf dem gewünschten Niveau.

In der ebenfalls auf die BASF zurückgehenden DE 10 2004 049 341 A1 wird vorgeschlagen, den zuvor genannten verkapselten Latentwärmespeicher Micronal^{®} PCM in einen Polyurethanhartschaumstoff einzubetten. Dazu werden die Speicherpartikel der flüssigen Monomermischung zugesetzt und diese anschließend ausgeschäumt. Diese Lösung wird schon aufgrund der hochgradig krebserzeugenden Monomere von Polyurethanen, den Di-isocyanaten, nicht in jedem Falle als befriedigend empfunden. Zudem sind Polyurethan-basierte Platten nicht für Brandschutzzwecke geeignet sondern können im Brandfall sogar giftige Dämpfe freisetzen.

Ein anderer Ansatz wird in dem von DuPont unter der Bezeichnung "Energain" vertriebenen Platte verfolgt. Dabei wird ein Phasenumwandlungs-Material in Form einer Mischung eines Copolymers mit einem Paraffin als Plattenkern sandwichartig von zwei Aluminiumplatten eingeschlossen. Eine solche Platte kann zwar nach Herstellerangaben wie eine Gipskartonplatte zugeschnitten werden, jedoch müssen die Schnittkanten anschließend wieder mit speziellen Aluminium-Klebeband versiegelt werden, um ein Herausfließen des Phasenumwandlungs-Materials zu verhindern. Die Verarbeitbarkeit einer solchen Platte ist deshalb in der Praxis schwierig. Außerdem können an den Schnittkanten möglicherweise mit der Zeit Undichtigkeiten auftreten mit der Folge, dass ein Teil des Phasenumwandlungs-Materials herausfließt.

Aus der DE 100 07 848 A1 ist es weiterhin bekannt, ein Latentwärmespeichermedium in eine Matrix aus einem Metallschaum einzubetten. Zwar mag die Verwendung eines Metallschaums zu einer guten Wärmeleitung führen, jedoch wären solche Matrixsysteme für den Baubereich zu kostspielig und würden zudem zusätzliche Brandschutzvorkehrungen erfordern.

Schließlich wird in der EP 2 058 278 A2 offenbart, bestimmte Phasenumwandlungs-Materialien in einer Matrix aus expandiertem Graphit einzuschließen. Aus diesem Material können Granulate oder Platten hergestellt werden. Nachteilig bei diesem Material sind die hohen Materialkosten, die einer breiten Anwendung im Baubereich entgegen stehen. Zudem ist Graphit auch aus brandschutztechnischer Sicht nicht unbedenklich. Expandierter Graphit quillt bei Hitzeeinwirkung sehr stark auf, so dass daraus hergestellte Platten nicht formstabil bleiben.

Aus US 4,259,401 A ist ein Latentwärmespeicher-Körper bekannt. Dieser wird in einem Autoklaven als Block hergestellt, der hauptsächlich aus Tobermorit aufgebaut ist. Der Block besitzt eine offene Porenstruktur und wird mit einem Phasenumwandlungs-Material imprägniert.

Die der vorliegenden Erfindung zugrunde liegende Aufgabe bestand also darin, einen Latentwärmespeicher-Körper zur Verfügung zu stellen, der eine hohe spezifische Wärmespeicherkapazität aufweist. Zudem soll der Latentwärmespeicher-Körper bei einer Vielzahl von Lade- und Entladevorgängen eine nahezu unveränderte Speicherkapazität und außerdem gute Brandschutzeigenschaften besitzen.

Diese Aufgabe wird gelöst durch einen Latentwärmespeicher-Körper umfassend einen zumindest teilweise offenporigen porösen Träger aus einem silikatischen Material das ein Calciumsilikathydrat enthält oder daraus besteht und ein hieran gebundenes Latentwärmespeicher-Material, insbesondere ein Phasenumwandlungs-Material (PCM = phase-change-material), wobei sich das Latentwärmespeicher-Material zumindest teilweise in den Poren des Trägers befindet, wobei der Latentwärmespeicher-Körper dadurch gekennzeichnet ist, dass das Calciumsilikathydrat Xonotlit enthält, wobei der Anteil an Xonotlit wenigstens 70 Gew.-% bezogen auf die Masse des Calciumsilikathydrats beträgt.

Der vorliegenden Erfindung liegt die Erkenntnis zugrunde, dass sich silikatische Träger mit einer großen Menge an Latentwärmespeicher-Material beziehungsweise Phasenumwandlungs-Materialien beladen lassen, so dass ein Großteil des Porenvolumens anschließend von diesem Material belegt ist. Daraus resultiert eine hohe spezifische Speicherkapazität, das heißt es kann mehr Energie (J) pro Masse (kg) des Formkörpers gespeichert werden.

Zudem hat sich überraschenderweise herausgestellt, dass selbst bei hohen Beladungen mit Latentwärmespeicher-Material dieses bei Überschreiten dessen Schmelzpunkts dennoch nicht aus dem silikatischen Material heraus fließt. Es wird vermutet, dass hierfür eine besondere Porenstruktur und daraus abgeleitete besonders ausgeprägte Kapillarkräfte innerhalb des silikatischen Materials verantwortlich sind.

Unter einem silikatischen Material wird im Rahmen der vorliegenden Erfindung ein solches Material verstanden, bei dem die Bestandteile CaO und SiO₂ die Gesamteigenschaften wesentlich mitbestimmen. Dies ist vor allem bei einem solchen Material der Fall, das wenigstens 35 Gew.-% SiO₂ enthält, insbesondere wenigstens 40 Gew.-%. Der Gehalt an CaO eines solchen Materials liegt beispielsweise bei wenigstens 25 Gew.-%, insbesondere bei bis zu 50 Gew.-% CaO.

Das Calciumsilikathydrat enthält HT-Calciumsilikathydrate (hochtemperaturbeständige Calciumsilikathydrate). HT-Calciumsilikathydrate sind dem Fachmann bekannt. Zu dieser Verbindungklasse gehört Xonotlit, welches im Rahmen der vorliegenden Erfindung verwendet wird.

So besteht eine besonders bevorzugte Ausführungsform der vorliegenden Erfindung darin, dass der Anteil an Xonotlit wenigstens 80 Gew.-%, jeweils bezogen auf die Masse des Calciumsilikathydrats und/ oder dass das silikatische Material einen Kristallwassergehalt von höchstens 15 Gew.-% aufweist, insbesondere höchstens 12 Gew.-%, bevorzugt höchstens 8 Gew.-%, weiter bevorzugt höchstens 3 Gew.-%. Xonotlit zeichnet sich durch einen geringen Kristallwassergehalt aus, der unter Normalbedingungen bei nur etwa 2,5 Gew.-% liegt. Dies ist von Vorteil, weil Formkörper mit solchen Materialien - oder anderen Calciumsilikat-hydraten mit den vorstehend angegebenen geringen Kristallwassergehalten - beim Erwärmen weniger Wasser abgeben und daher einem geringeren Volumenschwund unterliegen. Dadurch werden Spannungen vermieden, die zu einer unerwünschten Rissbildung führen können. Je geringer der Kristallwassergehalt ist, desto geringer fällt der Volumenschrumpf aus.

Der erfindungsgemäße Latentwärmespeicher-Körper kann beispielsweise in partikulärer Form vorliegen oder auch als Formkörper. Im erstgenannten Fall ist es besonders bevorzugt, wenn der Träger als Granulat vorliegt. Die Beladung mit dem Latentwärmespeicher-Material erfolgt zweckmäßigerweise so, dass die einzelnen Partikel des Trägers nicht miteinander verkleben, um die Schüttfähigkeit der partikulären Latentwärmespeicher-Körper zu erhalten.

Zur Herstellung eines Latentwärmespeicher-Formkörpers können verschiedene Methoden zum Einsatz kommen. Zweckmäßigerweise erfolgt die Herstellung über einen Autoklavierprozess, insbesondere in einem Rühr- oder Horizontalautoklaven. Die Formgebung kann beispielsweise über einen Gießprozess oder Verpressen erfolgen. Zur weiteren Verbesserung des Zusammenhalts kann vor der Formgebung oder dem Autoklavieren noch ein Bindemittel zugesetzt werden.

Bei der Herstellung eines erfindungsgemäßen Latentwärmespeicher-Formkörpers bestehen grundsätzlich zwei verschiedene Möglichkeiten. Bei der ersten Möglichkeit wird ein silikatische Träger in partikulärer Form zunächst zur gewünschten Gestalt des Formkörpers verpresst beziehungsweise gegossen und anschließend autoklaviert. In einem darauffolgenden Schritt wird der auf diese Weise hergestellte Formkörper mit dem Latentwärmespeicher-Material beladen.

Die andere Möglichkeit zur Herstellung eines Latentwärmespeicher-Formkörpers besteht darin, in einem ersten Schritt den silikatischen Träger in partikulärer Form mit dem Latentwärmespeicher-Material zu beladen und erst anschließend zum Formkörper zu verarbeiten.

Von den über die vorgenannten Prozesse hergestellten Formkörpern sind silikatische Dämmstoffplatten auf Basis von Calciumsilicat besonders bevorzugt, weil solche Materialien die Herstellung hochporöser Träger erlaubt, welche die Aufnahme großer Mengen an Latentwärmespeicher-Material ermöglichen und auch für ein geringes spezifisches Gewicht sorgen. Außerdem besitzen solche Platten auch eine ausgezeichnete mechanische Stabilität. Zudem sind solche Platten unbrennbar und bis in hohe Temperaturbereiche stabil, so dass auch brandschutztechnische Bedürfnisse mit derartigen Formkörpern erfüllt werden können.

Es liegt ebenfalls im Rahmen der vorliegenden Erfindung, dass zur Herstellung eines erfindungsgemäßen Latentwärmespeicher-Körpers in Granulatform zunächst ein Latentwärmespeicher-Formkörper wie zuvor beschrieben hergestellt und anschließend granuliert wird.

Erfindungsgemäße Formkörper können zwei unterschiedliche Porentypen besitzen, nämlich diejenigen, die von dem porösen partikulären silikatischen Träger stammen und solche, die durch die Formgebung des Formkörpers gebildet werden, also beispielsweise durch das Verpressen der silikatischen Partikel. Diese besondere Porenstruktur wirkt sich positiv auf das Aufnahmevermögen für Latentwärmespeicher-Material, die mechanische Stabilität sowie das spezifische Gewicht solcher Formkörper aus.

Die erfindungsgemäßen Latentwärmespeicher-Formkörper zeichnen sich also durch eine sehr große mechanische Stabilität aus, welche insbesondere derjenigen von Gipsplatten mit einformulierten verkapselten Phasenumwandlungs-Materialien weit überlegen ist. Dies gilt vor allem für diejenigen Formkörper, welche bereits vor dem Beladen mit dem Latentwärmespeicher-Material dem Formgebungsprozess unterzogen werden. Ein Grund hierfür wird darin gesehen, dass der poröse Formkörper von sich aus bereits eine hohe mechanische Stabilität besitzt und das Latentwärmespeicher-Material lediglich die Hohlräume dieses Formkörpers ausfüllt, also die Stabilität folglich kaum beeinflussen kann. Bei Verwendung von Phasenumwandlungs-Materialien sind die erfindungsgemäßen Formkörper aufgrund ihrer besseren Stabilität weitaus weniger anfällig gegenüber den mit der Phasenumwandlung einhergehenden ständigen Volumenänderungen. Viele bisher bekannte Materialien werden hingegen durch die häufigen Kontraktionen und Expansionen des Phasenumwandlungs-Materials mit der Zeit brüchig.

Ein weiterer Vorteil der erfindungsgemäßen Latentwärmespeicher-Körper besteht in ihrer Brandfestigkeit. Zwar büßt der Träger beziehungsweise der Formkörper durch das Auffüllen der Poren, also durch die Verdrängung der ursprünglich hierin enthaltenen Luft, einen Teil seiner thermischen Isolationswirkung ein. Jedoch ist das silikatische Material grundsätzlich sehr temperaturbeständig und zudem ein schlechter Wärmeleiter, so dass immer noch gute Brandschutzeigenschaften erzielt werden.

Als Latentwärmespeicher-Materialien kommen prinzipiell sämtliche Stoffe in Frage, die über einen reversiblen Prozess Energie aufnehmen und wieder abgeben können. Dies sind vor allem Phasenumwandlungs-Materialien, also solche Materialien, die eine Änderung des Aggregatzustandes durchlaufen, wobei der Phasenübergang fest/flüssig im Rahmen dieser Erfindung besonders geeignet ist. Aber auch andere Phasenübergänge wie flüssig/gasförmig oder fest/gasförmig sind prinzipiell anwendbar.

Weitere einsetzbare Latentwärmespeicher-Materialien können solche mit reversiblen Adsorptions- und Desorptionprozessen sein. Ebenfalls geeignet sind Materialien mit reversibler Ein- und Auslagerung eines Stoffs im Kristallgitter eines Feststoffs, wie beispielsweise diejenige von Kristallwasser in Calcium- oder Kupfersulfat. Zudem können auch Stoffsysteme mit einer reversiblen chemischen Reaktion verwendet werden.

Der erfindungsgemäße Latentwärmespeicher-Formkörper kann beispielsweise in Plattenform vorliegen oder entsprechend zugeschnitten und im Baubereich als innere Wandverkleidung verwendet werden. Diese Platten können zudem auch übertapeziert oder angestrichen werden, so dass sie nicht unmittelbar sichtbar sind. Tagsüber nehmen diese Platten dann über Fenster einfallendes Sonnenlicht in Form von Wärme latent auf, so dass eine übermäßige Raumerwärmung verhindert wird. Nimmt die Raumtemperatur nachts ab, so wird die aufgenommene Energie wieder in Form von Wärme an den Raum abgegeben, so dass sich der Raum weniger stark abkühlt als ohne diese Platten.

In hierzu analoger Weise können in partikulärer Form vorliegende Latentwärmespeicher-Körper verwendet werden, mit denen zum Beispiel Hohlräume beliebiger Geometrien ausgefüllt werden können.

Es ist erfindungsgemäß vorgesehen, dass der Träger Poren aufweist. Diese Poren stammen vom silikatischen Material, da ein bereits von sich aus poröses silikatisches Material verwendet wird, nämlich bestimmte Calciumsilikathydrate.

Erfindungsgemäß besteht das silikatische Material aus oder enthält Calciumsilikathydrat und kann auch weitere Silikate enthalten, wie Zeolithe, Calciumsilikate, Calcium-Aluminium-Silicate, Tone, insbesondere Blähtone Tobermorit, CSH-Phasen, Wollastonit, Bentonite, Kyanit, Feldspat, Schichtsilikalte, Glimmer, Fällungskieselsäuren, pyrogene Kieselsäuren, Zemente, Porenbeton, Kalksandstein-Granulate, Diatomeen, Kieselgur oder Mischungen von diesen.

Im Rahmen dieser Erfindung verwendbare Fällungskieselsäuren sind beispielsweise diejenigen, wie sie in der DE 601 21 998 T2 offenbart sind.

Porenbeton kann als Mischungsbestandteil verwendet werden, beispielsweise in Kombination aus etwa 75 bis 98 Gew.-% Porenbeton und 2 bis 25 Gew.-% Bentonit. Solche und ähnliche Zusammensetzungen sind beispielsweise aus der DE 20 2008 013 262 U1 zur Verwendung als Katzenstreu bekannt und können in der vorliegenden Erfindung als silikatisches Material verwendet werden.

In Weiterbildung des erfindungsgemäßen Latentwärmespeicher-Körpers weisen wenigstens 90 % der Poren des Trägers beziehungsweise des Formkörpers eine Porengröße von weniger als 10 µm auf, insbesondere 1 µm oder weniger. Es hat sich herausgestellt, dass es von Vorteil ist, wenn der Großteil der verfügbaren Poren eine geringe Größe und/ oder einen hohen Verwindungsgrad aufweist, da in diesem Fall das Latentwärmespeicher-Material vermutlich wegen der höheren Kapillarkräfte besser in die Poren aufgenommen und auch besser darin festgehalten wird. Ein Herausfließen des Latentwärmespeicher-Materials nach Überschreiten von dessen Schmelzpunkt kann so wirksam vermieden werden.

Nach einer weiteren Ausführungsform des erfindungsgemäßen Latentwärmespeicher-Körpers beträgt der mittlere Porenradius 50 bis 1000 nm, insbesondere 100 bis 900 nm. Bevorzugt liegt der mittlere Porenradius zwischen 200 und 800 nm, besonders bevorzugt zwischen 300 und 700 nm. Poren dieser Größe sind besonders vorteilhaft, weil diese zum einen ein großes Porenvolumen pro Pore sicherstellen und gleichzeitig ausreichende Kapillaraktivität besitzen, um aufgenommenes Latentwärmespeicher-Material in den Poren zu halten, selbst wenn dieses in flüssiger Form vorliegt. Gleichzeitig sind die Poren nicht so klein, dass sie durch die Phasenumwandlungsprozesse des Latentwärmespeichermaterials auf Dauer beschädigt werden.

Es ist des Weiteren von Vorteil, wenn das silikatische Material eine spezifische Oberfläche von 10 bis 100 m²/g aufweist, bevorzugt 20 bis 75 m²/g, besonders bevorzugt 25 bis 50 m²/g. Die spezifische Oberfläche kann in an sich bekannter Weise über BET-Methoden ermittelt werden.

In bevorzugter Weise wird für den erfindungsgemäßen Latentwärmespeicher-Körper ein Träger beziehungsweise ein Formkörper gewählt, dessen Porenvolumen wenigstens 70 Vol.-% beträgt, insbesondere wenigstens 80 Vol.-%. Ein besonders bevorzugter Träger beziehungsweise Formkörper zeichnet sich durch ein noch höheres Porenvolumen aus, wie beispielsweise wenigstens 85 Vol.-% oder gar wenigstens 90 Vol.-%. Das Porenvolumen lässt sich über an sich bekannte Methoden bestimmen wie BET-Methoden über Quecksilberporosimetrie und das Wasseraufnahmevermögen.

Erfindungsgemäß ist vorgesehen, dass das Latentwärmespeicher-Material an den porösen Träger beziehungsweise den Formkörper gebunden ist. Dies kann auf verschiedene Weise realisiert werden, wobei sich als besonders vorteilhaft herausgestellt hat, wenn das Latentwärmespeicher-Material unmittelbar mit dem silikatischen Material in Kontakt steht. Mit anderen Worten wird bei einer solchen Ausführungsform kein verkapseltes Latentwärmespeicher-Material eingesetzt, so dass die gesamte in den Träger beziehungsweise den Formkörper aufgenommene Substanz Latentwärmespeicher-Material sein kann, was sich steigernd auf die Wärmekapazität des Latentwärmespeicher-Körpers auswirkt.

Nach einer weiteren Ausführungsform des erfindungsgemäßen Latentwärmespeicher-Körpers besitzt der Träger beziehungsweise der Formkörper ein spezifisches Gewicht von bis zu 0,5 g/cm³, insbesondere bis zu 0,3 g/cm³, vorzugsweise bis zu 0,2 g/cm³. Auf diese Weise kann das spezifische Gewicht des Latentwärmespeicher-Körpers insgesamt reduziert werden.

Im Rahmen der vorliegenden Erfindung kann insbesondere ein solcher Träger beziehungsweise der Formkörper eingesetzt werden, bei dem wenigstens 70 % der gesamten Poren offene Poren sind, vorzugsweise wenigstens 80 %, weiter bevorzugt wenigstens 90 % oder gar wenigstens 95 %. Ganz besonders bevorzugte Träger beziehungsweise der Formkörper zeichnen sich dadurch aus, dass nahezu alle Poren offene Poren sind. Unter offenen Poren werden solche Poren verstanden, die in irgendeiner Weise in Fluidverbindung mit der Oberfläche des Trägers beziehungsweise des Formkörpers stehen.

Nach einer besonders bevorzugten Ausführungsform des erfindungsgemäßen Latentwärmespeicher-Körpers füllt das Latentwärmespeicher-Material im Mittel wenigstens 50% des Porenvolumens des Trägers beziehungsweise des Formkörpers aus, insbesondere wenigstens 60 %. Besonders bevorzugt ist es, wenn das Latentwärmespeicher-Material einen möglichst großen Anteil des verfügbaren Porenvolumens ausfüllt. Dies sind beispielsweise wenigstens 70 % des Porenvolumens, vorteilhafterweise wenigstens 80 % oder gar wenigstens 90 %. Es ist sogar möglich, dass nahezu das gesamte Porenvolumen des Trägers beziehungsweise des Formkörpers mit dem Latentwärmespeicher-Material ausgefüllt ist.

Was die Auswahl der erfindungsgemäß einsetzbaren Latentwärmespeicher-Materialien angeht, so sind diesbezüglich nahezu keine Grenzen gesetzt, sofern das Latentwärmespeicher-Material nicht mit dem silikatischen Material irreversibel reagiert.

Die erfindungsgemäß einsetzbaren Latentwärmespeicher-Materialien sind beispielsweise ausgewählt aus Wachsen, Kohlenwasserstoffen mit mehr als 10 Kohlenstoffatomen, insbesondere Paraffinen, Natriumacetat-Trihydrat, Magnesiumsulfat-Heptahydrat, Calciumchlorid-Hexahydrat, Kupfersulfat-Pentahydrat, Kupfersulfat-Monohydrat,oder Mischungen von diesen.

Bevorzugt werden Phasenumwandlungs-Materialien eingesetzt, die sich durch eine Phasenumwandlungstemperatur fest/flüssig im Temperaturbereich von -20 °C bis +100 °C auszeichnen, insbesondere von +10 °C bis +70 °C, weiter bevorzugt von +15 °C bis +35 °C. Für bautechnische Anwendungen eignen sich vor allem solche Phasenumwandlungs-Materialien, deren Umwandlungstemperatur im Bereich der Raumtemperatur liegen, also beispielsweise bei 25 °C +/- 10 °C, vorzugsweise 25 °C +/- 5 °C. Paraffine sind für diese Temperaturen im Bereich der Raumtemperatur besonders geeignete Vertreter.

Grundsätzlich kann der erfindungsgemäße Latentwärmespeicher-Körper auf verschieden Arten hergestellt werden. Eine bevorzugte Ausführung besteht in einem Latentwärmespeicher-Körper der durch Inkontaktbringen des silikatischen Trägers beziehungsweise des Formkörpers mit dem Latentwärmespeicher-Material in flüssiger Form erhältlich ist oder hergestellt wurde. Ein solcher Latentwärmespeicher-Körper ist deshalb bevorzugt, weil flüssiges Latentwärmespeicher-Material besser in die Porenstruktur des Trägers beziehungsweise des Formkörpers eindringen kann und dadurch eine höhere Beladung erzielt wird.

Die flüssige Form des Latentwärmespeicher-Materials beziehungsweise des Phasenumwandlungs-Materials kann beispielsweise eine Schmelze des jeweiligen Materials oder auch eine Lösung in einem Lösungsmittel sein. Bei der Verwendung eines Lösungsmittels muss dieses nach der Imprägnierung des Trägers beziehungsweise des Formkörpers wieder entfernt werden.

Bei Wachsen, Kohlenwasserstoffen mit mehr als 10 Kohlenstoffatomen, Paraffinen und Natriumacetat-Trihydrat handelt es sich um Phasenumwandlungs-Materialien, die eine Aggregatzustandsänderung fest/flüssig durchlaufen, die Energie also als Schmelzenthalpie aufnehmen beziehungsweise wieder abgeben. Diese Stoffe sind besonders bevorzugt, weil deren Zustandsänderung bei gemäßigten Temperaturen abläuft, das heißt in der Regel unterhalb von 100 °C. Dadurch lassen sich diese Materialien auch leicht an den Träger binden, indem diese Stoffe aufgeschmolzen werden und der Träger beziehungsweise der Formkörper beispielsweise in die Schmelze getaucht wird. Aber es ist auch grundsätzlich möglich, die zuvor genannten Stoffe in einem Lösungsmittel aufzulösen, den Träger mit der Lösung zu imprägnieren und anschließend das Lösungsmittel zu entfernen, beispielsweise über verdampfen, gewünschtenfalls bei Unterdruck.

Paraffine schmelzen je nach Mischung bei beispielsweise 20, 25 oder 30 °C, Natriumacetat-Trihydrat bei etwa 58 °C. Häufig ist es in diesem Zuge zweckmäßig, das entsprechende Phasenumwandlungs-Material nicht nur bis zu dessen Schmelzpunkt zu erwärmen sondern gegebenenfalls wenigstens 10 oder 20 °C darüber, um die Viskosität der Schmelze zu reduzieren und damit ein leichteres Eindringen in die Poren zu ermöglichen. Außerdem kann dadurch sicher gestellt werden, dass das Phasenumwandlungs-Material nicht unmittelbar an der Oberfläche des Trägers beziehungsweise des Formkörpers erstarrt und dadurch den Zutritt zu tiefer liegenden Poren erschwert. Zur Vermeidung dessen ist es zudem möglich, den Träger beziehungsweise den Formkörper vor der Imprägnierung ebenfalls auf eine Temperatur zu erwärmen, die oberhalb des Schmelzpunkts des verwendeten Phasenumwandlungs-Materials liegt.

Bei der Herstellung kann in der Weise verfahren werden, dass der Träger beziehungsweise der Formkörper in das flüssige Latentwärmespeicher-Material getaucht oder der Träger beziehungsweise der Formkörper mit diesem eingestrichen eingesprüht oder begossen wird. Um die Saugfähigkeit des Trägers beziehungsweise des Formkörpers und damit sein Aufnahmevermögen weiter zu erhöhen, kann dieser zuvor getrocknet werden, um eventuell absorbiertes oder adsorbiertes Wasser zu entfernen. Außerdem kann das Inkontaktbringen mit dem flüssigen Latentwärmespeicher-Material bei Unterdruck erfolgen, sodass ein Teil der in den Poren befindlichen Luft bereits entfernt ist und nicht erst vom flüssigen Latentwärmespeicher-Material verdrängt werden muss.

Der erfindungsgemäße Latentwärmespeicher-Formkörper kann grundsätzlich jede mögliche äußere Gestalt besitzen. So kann er in Form eines Zylinders, eines Bogens, eines Rings oder einer Platte vorliegen, insbesondere in Form einer porösen silikatischen Dämmstoffplatte, aber ebenfalls auch als Granulat. Diese Formen können alternativ dadurch erzeugt werden, dass ein partikulärer silikatischer Träger zunächst in die gewünschte Form gebracht und anschließend mit dem Latentwärmespeicher-Material beladen wird, oder dadurch, dass der partikuläre silikatische Träger zunächst mit dem Latentwärmespeicher-Material beladen und dann erst in die gewünschte Form gebracht wird.

Nach einer besonders bevorzugten Ausführungsform des erfindungsgemäßen Latentwärmespeicher-Köpers weist dieser eine Ummantelung auf. Die Ummantelung kann zum Schutz vor äußeren Einflüssen dienen. Beispielsweise kann ein mit Natriumacetat-Trihydrat beladener Träger beziehungsweise Formkörper gegenüber von außen eindringendes Wasser geschützt werden, das einen Teil des gut wasserlöslichen Natriumacetat-Trihydrat herauswaschen könnte. Ein mit einer entsprechenden wasserundurchlässigen Umhüllung versehener Träger kann beispielsweise in ein Becken mit Wasser als Wärmetauscherfluid gesetzt werden, um so als thermischer Energiespeicher einer Latentwärmespeichervorrichtung zu fungieren.

Eine weitere Funktion der Ummantelung kann darin bestehen, gasförmige oder verdampfbare Reaktionsprodukte reversibler Reaktionen verfügbar zu halten, indem die Ummantelung deren Abdiffusion verhindert.

Das Material der Ummantelung wird zweckmäßigerweise in Abhängigkeit vom Einsatzzweck gewählt. So kann die Ummantelung eine Folie sein, insbesondere eine Metall- und/oder Kunststofffolie, vorzugsweise eine Kunststoff-Schrumpffolie. Solche Ummantelungen lassen sich leicht herstellen und aufbringen. Zudem erfüllen sie für die meisten Zwecke die notwendigen Anforderungen. Alternativ oder zusätzlich kann der Latentwärmespeicher-Köper auch mit einer undurchlässigen Schicht, beispielsweise in Form eines Anstrichs, überzogen sein, die das unerwünschte Eindringen oder Abdiffundieren von Stoffen verhindert.

Bei der Verwendung einer Ummantelung, die eine Kunststofffolie beinhaltet, kann diese ein Polymer umfassen, das ausgewählt ist aus Polyolefinen, insbesondere Polyethylen oder Polypropylen, Polyamiden, Acrylaten, Polyvinylchlorid, Polyurethanen, Polyestern, Siliconen oder Mischungen von diesen.

Ein weiterer Gegenstand der vorliegenden Erfindung betrifft einen Latentwärmespeicher, der wenigstens einen erfindungsgemäßen Latentwärmespeicher-Körper umfasst. Unter einem Latentwärmespeicher wird eine Vorrichtung verstanden, bei der mit Hilfe eines Wärmetauscherfluids, im einfachsten Fall Wasser, Wärme von einer thermischen Energiequelle zu einem Wärmespeicher transportiert wird beziehungsweise im Bedarfsfalle wieder in entgegen gesetzter Richtung.

Bei einem solchen Speicher kann es sich im einfachsten Fall um einen abgeschlossenen und vorzugsweise thermisch isolierten Behälter handeln, der mit dem Wärmetauscherfluid gefüllt ist und in dem wenigstens ein erfindungsgemäßer Latentwärmespeicher-Körper angeordnet ist. So kann beispielsweise eine Vielzahl von als Platten ausgestalteten Latentwärmespeicher-Formkörpern oder entsprechende Granulate mit einer Kunststofffolien-Ummantelung in dem Behälter vorgesehen sein. Das Wärmetauscherfluid steht in Strömungsverbindung mit wenigstens einem Wärmetauscher, um dem System Energie zuzuführen oder zu entnehmen.

## Patentansprüche

1. Latentwärmespeicher-Körper umfassend einen zumindest teilweise offenporigen porösen Träger aus einem silikatischen Material das ein Calciumsilikathydrat enthält oder hieraus besteht, und ein hieran gebundenes Latentwärmespeicher-Material, insbesondere ein Phasenumwandlungs-Material (PCM), wobei sich das Latentwärmespeicher-Material zumindest teilweise in den Poren des Trägers befindet,
**dadurch gekennzeichnet, dass**
das Calciumsilikathydrat Xonotlit enthält, wobei der Anteil an Xonotlit wenigstens 70 Gew.-% bezogen auf die Masse des Calciumsilikathydrats beträgt.

2. Latentwärmespeicher-Körper nach Anspruch 1,
**dadurch gekennzeichnet, dass**
der Träger in partikulärer Form vorliegt, insbesondere als Granulat.

3. Latentwärmespeicher-Körper nach Anspruch 1 oder 2,
**dadurch gekennzeichnet, dass**
der Körper als Formkörper vorliegt, insbesondere als Platte, wobei der Formkörper vorzugsweise durch Verpressen des Trägers in partikulärer Form hergestellt ist und wobei der Formkörper vorzugsweise in Form eines Zylinders, eines Bogens, eines Rings oder einer Platte vorliegt, insbesondere in Form einer porösen silikatischen Dämmstoffplatte.

4. Latentwärmespeicher-Körper nach einem der vorstehenden Ansprüche,
**dadurch gekennzeichnet, dass**
das silikatische Material wenigstens 25 Gew.-% CaO enthält, insbesondere bis zu 50 Gew.-%.

5. Latentwärmespeicher-Körper nach einem der vorstehenden Ansprüche,
**dadurch gekennzeichnet, dass**
der Anteil an Xonotlit wenigstens 80 Gew.-% beträgt bezogen auf die Masse des Calciumsilikathydrats und/ oder dass das silikatische Material einen Kristallwassergehalt von höchstens 15 Gew.-% aufweist, insbesondere höchstens 12 Gew.-%, bevorzugt höchstens 8 Gew.-%, weiter bevorzugt höchstens 3 Gew.-%.

6. Latentwärmespeicher-Körper nach einem der vorstehenden Ansprüche,
**dadurch gekennzeichnet, dass**
das silikatische Material weitere Silikate enthält, die insbesondere ausgewählt sind aus Aluminiumsilikaten, insbesondere Zeolithen, Calciumsilikate Calcium-Aluminium-Silikaten, Tonen, insbesondere Blähtonen, Tobermorit, CSH-Phasen, Wollastonit, Bentonite, Kyanit, Feldspat, Schichtsilikaten, Glimmer, Fällungskieselsäuren, pyrogene Kieselsäuren, Zementen, Porenbeton, Kalksandstein-Granulate, Diatomeen, Kieselgur oder Mischungen von diesen.

7. Latentwärmespeicher-Körper nach einem der vorstehenden Ansprüche,
**dadurch gekennzeichnet, dass**
das silikatische Material eine spezifische Oberfläche von 10 bis 100 m²/g aufweist, insbesondere 20 bis 75 m²/g.

8. Latentwärmespeicher-Körper nach einem der vorstehenden Ansprüche,
**dadurch gekennzeichnet, dass**
das Latentwärmespeicher-Material unmittelbar mit dem silikatischen Material in Kontakt steht.

9. Latentwärmespeicher-Körper nach einem der vorstehenden Ansprüche,
**dadurch gekennzeichnet, dass**
das Latentwärmespeicher-Material im Mittel wenigstens 50 % des Porenvolumens des Trägers beziehungsweise des Formkörpers ausfüllt, insbesondere wenigstens 60 %.

10. Latentwärmespeicher-Körper nach einem der vorstehenden Ansprüche,
**dadurch gekennzeichnet, dass**
das Latentwärmespeicher-Material ein Phasenumwandlungs-Material ist, dessen Phasenumwandlungstemperatur fest/flüssig im Temperaturbereich von -20 °C bis +100 °C liegt, insbesondere von +10 °C bis +70 °C.

11. Latentwärmespeicher-Körper nach einem der vorstehenden Ansprüche,
**dadurch gekennzeichnet, dass**
das Latentwärmespeicher-Material ausgewählt ist aus Wachsen, Kohlenwasserstoffen mit mehr als 10 Kohlenstoffatomen, insbesondere Paraffinen, Natriumacetat-Trihydrat, Magnesiumsulfat-Heptahydrat, Calciumchlorid-Hexahydrat, Kupfersulfat-Pentahydrat, Kupfersulfat-Monohydrat, oder Mischungen von diesen.

12. Latentwärmespeicher-Körper nach einem der vorstehenden Ansprüche,
**dadurch gekennzeichnet, dass**
wenigstens 90 % der Poren des Trägers und/ oder des Formkörpers eine Porengröße von weniger als 10 µm aufweisen, insbesondere 1 µm oder weniger, wobei der mittlere Porenradius der Poren des Trägers und/ oder des Formkörpers vorzugsweise 50 bis 1000 nm beträgt, besonders bevorzugt 100 bis zu 900 nm.

13. Latentwärmespeicher-Körper nach einem der vorstehenden Ansprüche,
**dadurch gekennzeichnet, dass**
der Träger beziehungsweise der Formkörper ein Porenvolumen von wenigstens 70 Vol.-% aufweist, insbesondere wenigstens 80 Vol.-% und/ oder dass wenigstens 70 % der Poren des Trägers und/ oder des Formkörpers offene Poren sind, insbesondere wenigstens 80 %.

14. Latentwärmespeicher-Körper nach einem der vorstehenden Ansprüche,
**dadurch gekennzeichnet, dass**
der Träger beziehungsweise der Formkörper ein spezifisches Gewicht von bis zu 0,5 g/cm³ aufweist, insbesondere bis zu 0,3 g/cm³, vorzugsweise bis zu 0,2 g/cm³.

15. Latentwärmespeicher-Körper nach einem der vorstehenden Ansprüche,
**dadurch gekennzeichnet, dass**
der Körper durch Inkontaktbringen des Trägers und/ oder des Formkörpers mit dem Latentwärmespeicher-Material in flüssiger Form erhältlich oder hergestellt ist.

16. Latentwärmespeicher-Körper nach einem der vorstehenden Ansprüche,
**dadurch gekennzeichnet, dass**
der Körper eine Ummantelung aufweist, wobei die Ummantelung bevorzugt eine Folie ist, insbesondere eine Metall- und/oder Kunststofffolie, vorzugsweise eine Kunststoff-Schrumpffolie und wobei die Kunststofffolie ein Polymer umfasst, das vorzugsweise ausgewählt ist aus Polyolefinen, insbesondere Polyethylen oder Polypropylen, Polyamiden, Acrylaten, Polyvinylchlorid, Polyurethanen, Polyestern, Siliconen oder Mischungen von diesen.

17. Latentwärmespeicher, umfassend wenigstens einen Latentwärmespeicher-Körper nach einem der Ansprüche 1 bis 16.

## Claims

1. A latent heat storage body comprising an at least partially open-pore porous carrier made of a siliceous material which contains or consists of a calcium silicate hydrate and a latent heat storage material bounded thereto, especially a phase change material (PCM), wherein the latent heat storage material being at least partially presenet in the pores of the carrier,
**characterized in that**
the calcium silicate hydrate contains xonotlite, wherein the amount of xonotlite is less than 70 % by weight referring to the mass of the calcium silicate hydrate.

2. A latent heat storage body according to claim 1,
**characterized in that**
the carrier is present in a particulate form, in particular as a granulate.

3. A latent heat storage body according to claim 1 or 2,
**characterized in that**
the body is a moulded body, in particular a plate, wherein the moulded body is preferably manufactured by pressing the carrier is in particulate form, and wherein the moulded body is preferably present in form of a cylinder, an arc, a ring or a plate, in particular in form of a porous siliceous insulation board.

4. A latent heat storage body according to one of the preceding claims,
**characterized in that**
the siliceous material contains at least 25 % by weight CaO, in particular up to 50 % by weight.

5. A latent heat storage body according to one of the preceding claims,
**characterized in that**
the proportion of xonotlite is at least 80 % by weight referring to the mass of the calcium silicate hydrate and/or that the siliceous material comprises a crystal water content not exceeding 15 % by weight, in particular not exceeding 12 % by weight, preferably not exceeding 8 % by weight and most preferably not exceeding 3 % by weight.

6. A latent heat storage body according to one of the preceding claims,
**characterized in that**
the siliceous material contains further silicates which are in particular selected from aluminum silicates, especially zeolites, calcium silicates, calcium-aluminum silicates, clays, especially foamed clays, tobermorite, CSH phases, wollastonite, bentonite, kyanite, feldspar, layer silicates, mica, precipitation silicic acids, pyrogenic silicic acids, cements, aerated concrete, sand-lime brick granulates, diatoms, kieselgur, or mixtures of these ones.

7. A latent heat storage body according to one of the preceding claims,
**characterized in that**
the siliceous material comprises a specific surface comprised between 10 and 100 m²/g, in particular between 20 and 75 m²/g.

8. A latent heat storage body according to one of the preceding claims,
**characterized in that**
the latent heat storage material is in immediate contact with the siliceous material.

9. A latent heat storage body according to one of the preceding claims,
**characterized in that**
the latent heat storage material on average fills out at least 50 % of the pore volume of the carrier or the moulded body, in particular at least 60 %.

10. A latent heat storage body according to one of the preceding claims,
**characterized in that**
the latent heat storage material is a phase change material, whose solid/liquid phase change temperature is in the temperature range of -20°C to +100°C, in particular +10°C to +70°C.

11. A latent heat storage body according to one of the preceding claims,
**characterized in that**
the latent heat storage material is selected from waxes, hydrocarbons having more than 10 carbon atoms, in particular paraffins, sodium acetate trihydrate, magnesium sulfate heptahydrate, calcium chloride hexahydrate, copper sulfate pentahydrate, copper sulfate monohydrate, or mixtures of these ones.

12. A latent heat storage body according to one of the preceding claims,
**characterized in that**
at least 90 % of the pores of the carrier and/or the moulded body comprise a pore size of less than 10 µm, in particular 1 µm or less, wherein the average pore radius of the pores of the carrier and/or the moulded body is preferably between 50 and 1000 nm, most preferably between 100 and 900 nm.

13. A latent heat storage body according to one of the preceding claims,
**characterized in that**
the carrier respectively the moulded body comprises a pore volume of at least 70 % by volume, in particular at least 80 % by volume, and/or that at least 70 % of the pores of the carrier and/or the moulded body are open pores, in particular at least 80 %.

14. A latent heat storage body according to one of the preceding claims,
**characterized in that**
the carrier respectively the moulded body comprises a specific weight of up to 0.5 g/cm³, in particular up to 0.3 g/cm³, preferably up to 0.2 g/cm³.

15. A latent heat storage body according to one of the preceding claims,
**characterized in that**
the body can be obtained or is produced by bringing the carrier and/or the moulded body into contact with the latent heat storage material in liquid form.

16. A latent heat storage body according to one of the preceding claims,
**characterized in that**
the body comprises a sheath, wherein the sheath is preferably a film, in particular a metal and/or plastic film, preferably a plastic shrink film, and wherein the plastic film comprises a polymer which is preferably selected from polyolefines, in particular polyethylene or polypropylene, polyamides, acrylates, polyvinyl chloride, polyurethanes, polyesters, silicones, or mixtures of these ones.

17. A latent heat storage comprising at least one latent heat storage body according to one of the claims 1 to 16.

## Revendications

1. Corps d'accumulateur de chaleur latente comprenant un support poreux ayant au moins partiellement des pores ouverts et consistant en un matériau siliceux qui contient un silicate de calcium hydraté ou en est composé, et un matériau accumulateur de chaleur latente, notamment un matériau de conversion de phases (PCM), lié au dit support, le matériau accumulateur de chaleur latente se trouvant au moins partiellement dans les pores du support,
**caractérisé en ce que**
le silicate de calcium hydraté contient de la xonotlite, la teneur en xonotlite étant au moins 70 % en poids par rapport à la masse du silicate de calcium hydraté.

2. Corps d'accumulateur de chaleur latente selon la revendication 1,
**caractérisé en ce que**
le support est présent sous forme particulaire, notamment sous forme de granulat.

3. Corps d'accumulateur de chaleur latente selon la revendication 1 ou la revendication 2,
**caractérisé en ce que**
le corps est présent sous forme d'un corps moulé, notamment sous forme d'une plaque, le corps moulé étant de préférence fabriqué par compression du support présent sous forme particulaire, et le corps moulé étant de préférence présent sous forme d'un cylindre, d'un arc, d'une bague ou d'une plaque, notamment sous forme d'un panneau isolant siliceux et poreux.

4. Corps d'accumulateur de chaleur latente selon l'une des revendications précédentes,
**caractérisé en ce que**
le matériau siliceux contient au moins 25 % en poids de CaO, notamment jusqu'à 50 % en poids.

5. Corps d'accumulateur de chaleur latente selon l'une des revendications précédentes,
**caractérisé en ce que**
la teneur en xonotlite est au moins 80 % en poids par rapport à la masse du silicate de calcium hydraté et/ou que le matériau siliceux comprend une teneur en eau de cristallisation d'au plus 15 % en poids, notamment d'au plus 12 % en poids, de préférence d'au plus 8 % en poids, de préférence particulière d'au plus 3 % en poids.

6. Corps d'accumulateur de chaleur latente selon l'une des revendications précédentes,
**caractérisé en ce que**
le matériau siliceux contient d'autres silicates, qui sont notamment sélectionnés dans les silicates d'aluminium, notamment les zéolithes, les silicates de calcium, les silicates de calcium-aluminium, les argiles, notamment les argiles expansées, la tobermorite, les phases CSH, la wollastonite, les bentonites, le disthène, le feldspath, les silicates en couches, le mica, les silices de précipitation, les acides siliciques pyrogènes, les céments, le béton cellulaire, les granulats de briques silico-calcaires, les diatomées, la diatonite, ou les mélanges de ceux-ci.

7. Corps d'accumulateur de chaleur latente selon l'une des revendications précédentes,
**caractérisé en ce que**
le matériau siliceux comprend une surface spécifique comprise entre 10 et 100 m²/g, notamment entre 20 et 75 m²/g.

8. Corps d'accumulateur de chaleur latente selon l'une des revendications précédentes,
**caractérisé en ce que**
le matériau accumulateur de chaleur latente est en contact immédiat avec le matériau siliceux.

9. Corps d'accumulateur de chaleur latente selon l'une des revendications précédentes,
**caractérisé en ce que**
le matériau accumulateur de chaleur latente remplit, en moyenne, au moins 50 % du volume de pores du support respectivement du corps moulé, notamment au moins 60 %.

10. Corps d'accumulateur de chaleur latente selon l'une des revendications précédentes,
**caractérisé en ce que**
le matériau accumulateur de chaleur latente est un matériau de conversion de phases, dont la température de conversion de phases solides-liquides est comprise dans la gamme de température de -20°C à +100°C, notamment de +10°C à +70°C.

11. Corps d'accumulateur de chaleur latente selon l'une des revendications précédentes,
**caractérisé en ce que**
le matériau accumulateur de chaleur latente est sélectionné dans les cires, les hydrocarbures ayant plus de 10 atomes de carbone, notamment les paraffines, l'acétate de sodium trihydrate, le sulfate de magnésium heptahydrate, la chlorure de calcium hexahydrate, le sulfate de cuivre pentahydrate, le sulfate de cuivre monohydrate, ou les mélanges de ceux-ci.

12. Corps d'accumulateur de chaleur latente selon l'une des revendications précédentes,
**caractérisé en ce qu'**
au moins 90 % des pores du support et/ou du corps moulé comprennent une taille de pore de moins de 10 µm, notamment de 1 µm ou moins, le rayon moyen de pores des pores du support et/ou du corps moulé étant entre 50 et 1000 nm, de préférence particulière entre 100 et 900 nm.

13. Corps d'accumulateur de chaleur latente selon l'une des revendications précédentes,
**caractérisé en ce que**
le support respectivement le corps moulé comprend un volume de pores d'au moins 70 % en volume, notamment d'au moins 80 % en volume, et/ou qu'au moins 70 %, notamment au moins 80% des pores du support et/ou du corps moulé sont des pores ouverts.

14. Corps d'accumulateur de chaleur latente selon l'une des revendications précédentes,
**caractérisé en ce que**
le support respectivement le corps moulé comprend un poids spécifique de jusqu'à 0,5 g/cm³, notamment jusqu'à 0,3 g/cm³, de préférence jusqu'à 0,2 g/cm3.

15. Corps d'accumulateur de chaleur latente selon l'une des revendications précédentes,
**caractérisé en ce que**
le corps est obtenu ou fabriqué en mettant le support et/ou le corps moulé en contact avec le matériau accumulateur de chaleur latente sous forme liquide.

16. Corps d'accumulateur de chaleur latente selon l'une des revendications précédentes,
**caractérisé en ce que**
le corps comprend une gaine, la gaine étant de préférence une feuille, notamment une feuille métallique et/ou plastique, de préférence une feuille plastique rétractable, et la feuille plastique comprenAant un polymère, qui est de préférence sélectionné dans les polyoléfines, notamment le polyéthylène ou le polypropylène, les polyamides, les acrylates, la polychlorure de vinyle, les polyuréthanes, les polyesters, les silicones, ou les mélanges de ceux-ci.

17. Accumulateur de chaleur latente comprenant au moins un corps d'accumulateur de chaleur latente selon l'une des revendications 1 à 16.
